# EUROPEAN PATENT SPECIFICATION

(11) **EP 1 156 243 B1**
(45) Date of publication and mention of the grant of the patent: **24.10.2007**
(21) Application number: 00979034.6
(22) Date of filing: 30.11.2000
(51) Int. Cl.: F16K 5/04, F16K 11/085

(54) **FLOW CONTROL VALVE**
DURCHFLUSSREGELVENTIL
VALVE DE REGULATION DE DEBIT

(30) Priority: 30.11.1999 JP 34060099
(43) Date of publication of application: 21.11.2001
(73) Proprietor: Denso Corporation, Kariya-shi, Aichi-ken, 448-8661 (JP)
(72) Inventor: OHTA, Hiromi, Intellectual Property Center, Kariya-shi, Aichi 448-8661 (JP)
(74) Representative: Klingseisen, Franz
(86) International application number: PCT/JP2000/008480
(87) International publication number: WO 2001/040687

(56) References cited:
- JP-A- 1 153 876
- JP-A- 5 172 261
- JP-A- 8 178 093
- JP-A- 9 156 339
- JP-A- 10 132 097
- JP-U- 59 118 855
- JP-U- 59 125 660
- US-A- 2 483 722
- US-A- 4 700 928
- US-A- 4 778 152
- US-A- 5 690 070
- US-A- 5 871 032

## Description

### TECHNICAL FIELD

The present invention relates to a flow control valve provided in a hot water circuit of a vehicle heater for switching a flow path for hot water.

### BACKGROUND ART

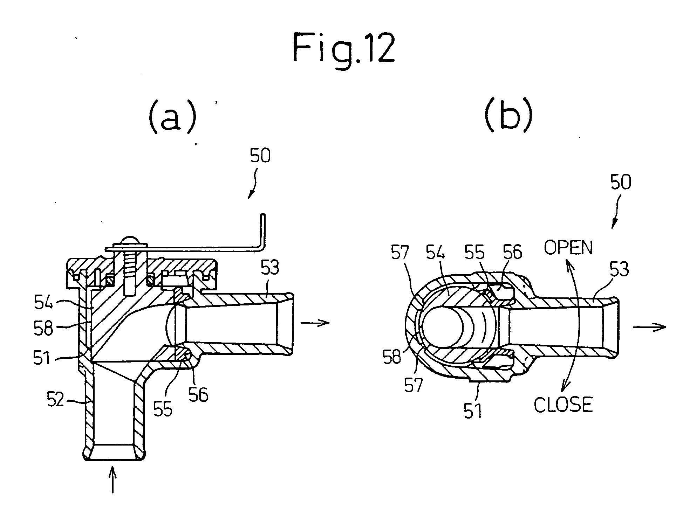

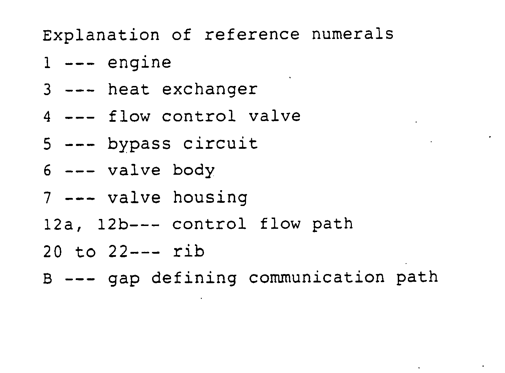

In the prior art, a flow control valve 50 as shown in Fig. 12 has been known. The valve is provided in a hot water circuit of a vehicle heater for adjusting a flow rate of hot water. A hot water inlet pipe 52 and a hot water outlet pipe 53 are formed in a valve housing 51, in which a valve body 54 is accommodated. A flow rate of the hot water to be fed to a heat exchanger for a heater (heater core) via the hot water outlet pipe 53 is adjusted by rotating the valve body 54 to open/close the hot water circuit.

A packing 55 for sealing the valve body 54 is provided at an upstream end of the hot water outlet pipe 53 and is biased by a plate spring 56 to be in tight contact with the valve body 54. Two ribs 57 are formed in a contact surface of the valve body 54 to provide a gap 58 between the valve body 54 and the valve housing 51. By providing the gap 58 between the valve body 54 and the valve housing 51 in such a manner, it is intended to prevent foreign matters contained in the hot water (such as molding sand generated during the engine production) from remaining in therebetween.

However, according to the flow control valve of the above-mentioned structure, the hot water dwells in the valve housing 51 when the hot water outlet pipe 53 is fully open (at a position where the valve body is rotated by approximately 90 degrees from a position shown in Fig. 12(b)) whereby the foreign matters are liable to be left in the interior of the valve housing 51. If the valve body 54 is frequently rotated to repeat the flow rate adjustment under such circumstances, there is a probability in that the foreign matters may get into between the valve housing 51 and the valve body 54 to impair a rotor surface of the valve body 54. If the rotor surface of the valve body 54 is impaired, there would be a problem in that a gap is generated between the valve body 54 and the packing 55 to deteriorate the sealability.

Furthermore, there is known from US-A-2,483,722 a flow control valve for controlling gas flow of an intermittent pressure breathing apparatus being the basis for the preamble of appending claim 1. Especially, the conventional flow control valve comprises a housing having a gas inlet port for supplying oxygen into the valve, a breathing port for directing the oxygen supplied into the valve through the gas inlet port to a coupling member, and an outlet port communicating directly to ambient atmosphere; a valve core provided in the interior of a chamber within the housing in a rotatable manner for opening/closing the inlet port, the breathing port and the outlet port; and passageways formed in said valve core for regulating an open area of the breathing port and the ouitlet port.

### DISCLOSURE OF THE INVENTION

The present invention has been made in view of the above problems in the prior art, and an object thereof is to maintain a sealability between a valve body and a valve housing in a flow control valve provided in a hot water circuit by preventing foreign matter from entering the interior of the valve housing.

To achieve the above object, according to the flow control valve of the present invention, part of the hot water supplied to the valve through an inlet flow.path is directed to a bypass side outlet flow path via a communication path for communicating a control flow path with the bypass side outlet flow path when the opening degree of the bypass side outlet flow path is minimum, whereby even if foreign matters contained in the hot water flow into the interior of the valve housing, they could always be excluded therefrom to the bypass side outlet flow path. As a result, it is possible to prevent the rotor surface of the valve body from being damaged due to the foreign matter, whereby the sealability between the valve body and the valve housing is maintained.

The present invention will be described below in more detail with reference to the preferred embodiments illustrated in the attached drawings.

### BRIEF DESCRIPTION OF THE DRAWINGS

Fig. 1 is a sectional view illustrating a main part of a flow control valve according to the present invention;
Fig. 2 is a view illustrating a system of a hot water circuit to which is applied the flow control valve according to the present invention;
Fig. 3 is a top view of the flow control valve according to the present invention;
Fig. 4 is a side view of the flow control valve according to the present invention;
Fig. 5 is a sectional view of the flow control valve according to the present invention taken along line A-A in Fig. 3;
Fig. 6 is a perspective view illustrating a shape of an inner wall surface of a valve housing;
Fig. 7 is a sectional view taken along line B-B in Fig. 4, illustrating a position of the valve body when a heater is operated at the maximum capacity;
Fig. 8 is a sectional view taken along line B-B in Fig. 4, illustrating a position of the valve body when the heater is not operated;
Fig. 9(a) is a graph showing a force for operating the valve body in accordance with a gap of a communication path;
Fig. 9(b) is a graph showing a leakage rate of hot water to a heat exchanger in accordance with the gap of the communication path, which represents the resistance to molding sand;
Fig. 10 is a graph showing a leakage rate of hot water to a bypass circuit in accordance with the gap of the communication path;
Fig. 11 is a sectional view of a flow control valve according to a second aspect of the present invention;
Fig. 12(a) is a sectional view of a prior art flow control valve taken along a plane parallel to an axial direction of a valve body; and
Fig. 12(b) is a sectional view of the prior art flow control valve taken along a plane vertical to the axial direction of a valve body.

### BEST MODES FOR CARRYING OUT THE INVENTION

### (First embodiment)

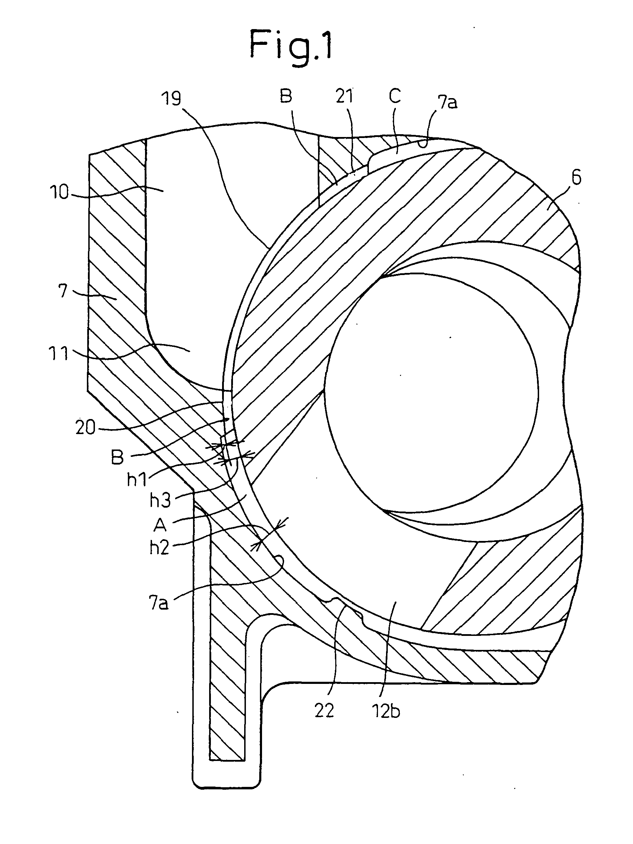

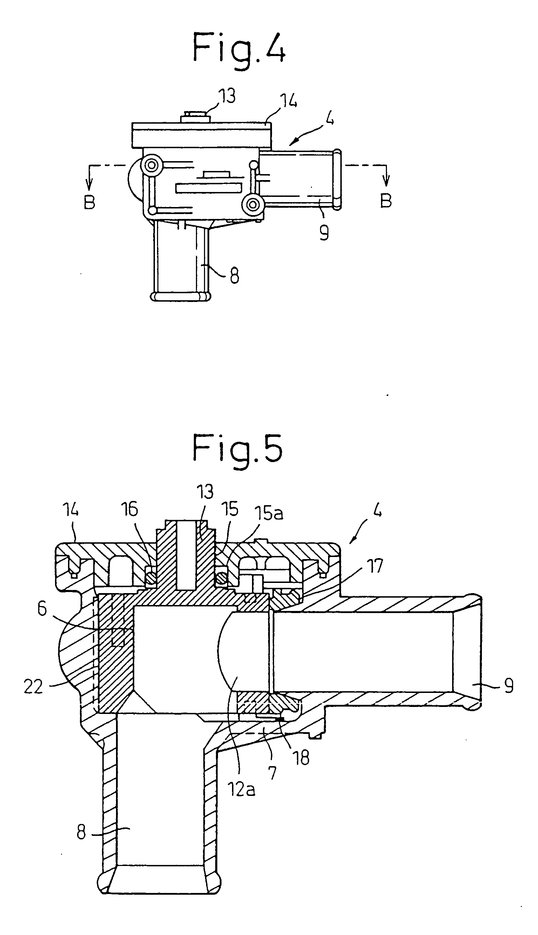

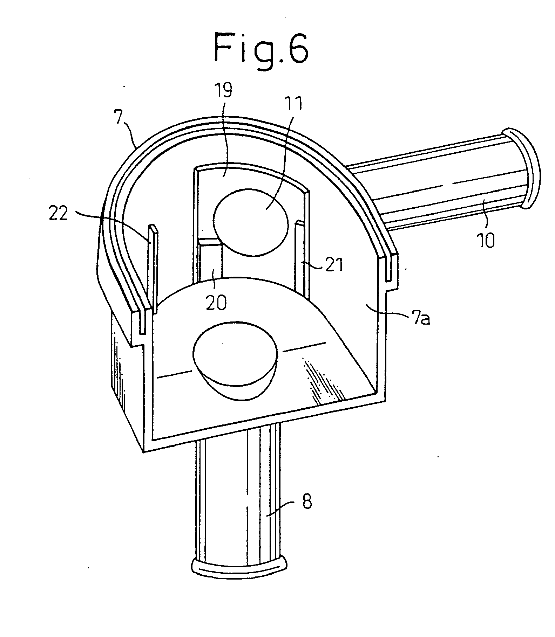

One embodiment will be described below with reference to Figs. 1 to 10, wherein the present invention is applied to a car heater of a hot water type in a car air conditioner.

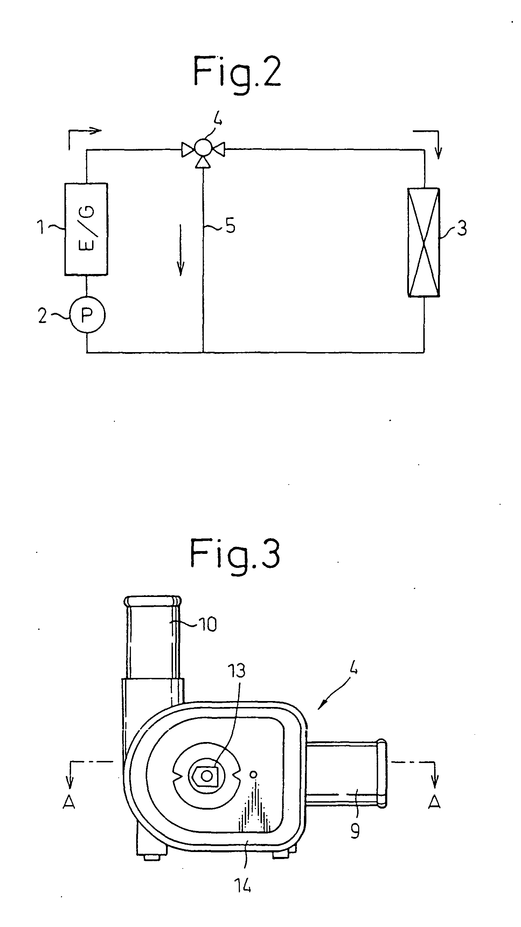

In Fig. 2, reference numeral 1 denotes a water-cooled type car engine (a hot water source) and 2 denotes a water pump driven by the engine 1 to circulate water through a cooling water circuit (hot water circuit) of the engine 1. Reference numeral 3 denotes a heat exchanger for a heater (heat core) for heat-exchanging between hot water fed from the engine 1 and air to heat the air, and 4 denotes a flow control valve according to the present invention having a structure of a three-way valve type with three paths for hot water. In the cooling water circuit, a bypass circuit 5 is provided parallel to the heat exchanger 3 so that the hot water can return while bypassing the heat exchanger 3.

Next, the flow control valve 4 according to the present invention will be described in detail.

Reference numeral 6 denotes a valve body molded in a cylindrical form with a resinous material excellent both in heat resistance and moldability. The valve body 6 is disposed and accommodated in a rotatable manner within the interior of a valve housing 7 formed, of a resin excellent both in heat resistance and moldability, into a generally tubular form.

On the bottom surface of the valve housing 7, a hot water inlet pipe 8 (inlet side flow path), molded with the resin integrally therewith, through which hot water enters the valve housing 7 from the engine 1. In the lateral peripheral wall of the valve housing 7, a first hot water outlet pipe 9 (heat exchanger side outlet flow path) for directing the hot water flowing from the hot water inlet pipe 8 to the heat exchanger 3 and a second hot water outlet pipe 10 (bypass side outlet flow path) for directing the hot water flowing from the hot water inlet pipe 8 to the bypass circuit 5 are molded with the resin in integral therewith. In this regard, an upstream portion of the first hot water outlet pipe 9 is of a form projected into the valve body 6. An upstream end opening 11 of the second hot water inlet pipe 10 is defined at a position deviated from an axial center of the first hot water outlet pipe 8.

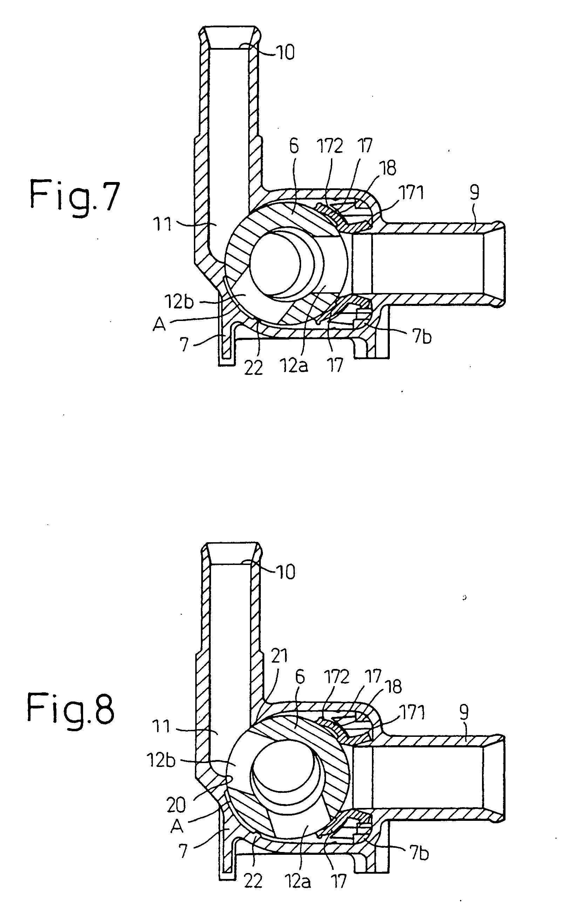

Control flow paths 12a, 12b (see Figs. 7 and 8) are provided in the cylindrical valve body 6 for regulating opening areas of the respective pipes 9 and 10 with a predetermined correlation. Reference numeral 13 denotes a shaft coupled to the valve body 6 integrally therewith for rotationally operating the valve body 6. This shaft 13 is fitted into a through-hole 15 formed in an upper cover 14 for the valve housing 7 to project out of the upper cover 14. A projected end of the shaft 13 is coupled to an actuator such as a motor or the like via a lever, not shown, to be rotatable thereby. In this regard, the shaft 13 may be manually rotated. An O-ring 16 is disposed in an annular groove 15a formed along the inner peripheral wall of the through-hole 15 for the purpose of sealing.

Reference numeral 17 is a hollow tubular seal member formed of a rubber-like material excellent in heat resistance, such as nitro-butadiene rubber, one end 171 of which is brought into tight contact and fitted with the outer periphery of the hot water outlet pipe 9 projected into the valve body 6 to seal the same. The outer periphery of the fitted portion of the seal member 17 is fastened with a wire.

The other end 172 of the seal member 17 is larger than the one end 171 as seen in the radial direction. An annular convex portion is projected from the inner wall of the other end 172 of the seal member 17 and brought into tight contact with the periphery of the control flow path 12a of the valve body. Further, a front area of the other end 172 of the seal member 17 is in tight contact with the periphery of the control flow path 12a solely in the axial direction of the valve body 6.

Also, as illustrated, a plate spring 18 is a rectangular member of anti-corrosive spring material such as stainless steel, which is bent at opposite ends and has a hole (not shown) in a middle portion thereof. As shown in Fig. 7, the valve body 6 is disposed so that the bent ends of the plate spring 18 are held by a shoulder 7b formed in the valve housing 7 and the seal member 17 is fitted into the hole of the plate spring 18, whereby the elastic force of the plate spring 18 is applied to the other end 172 of the seal member 17 to cause the other end 172 of the seal member 17 to be in tight contact with the valve body 6.

On the other hand, in the first hot water outlet pipe 9, the valve body 6 is brought into tight contact with the seal member 17 and held in a rotatable manner. In this regard, since the plate spring 18 has an elastic force as small as possible, provided the press-contact of the other end 172 of the seal member 17 with the valve body 6 can be maintained, the valve body 6 is smoothly rotatable.

A seat surface 19 having a predetermined height h1 (for example, 0.8 mm) is defined on the periphery of the opening 11 in an inner wall 7a of the valve housing 7. Ribs 20, 21 are formed on the seat surface 19. A rib 22 is formed at a position symmetrical with the rib 21 relative to an axis of the second hot water outlet pipe 9 in the inner wall 7a of the valve housing 7, so that a load of the valve body 6 biased with the plate spring 18 is equally applied to the ribs 21 and 22.

These ribs 20 to 22 have a height h2 from the inner wall 7a of the valve housing 7, and the valve body 6 is held to define a gap A between the same and the inner wall 7a of the valve housing 7.

The ribs 20, 21 are partially formed in the axial direction of the valve body 6, and a part of the inner wall 7a of the valve housing 7, wherein the ribs 20, 21 are not formed, has a height h1 of the seat surface 19 relative to the inner wall 7a of the valve housing 7. A gap B is defined between the valve body 6 and the inner wall (7a) of the valve housing (7). As shown in Fig. 1, when the second hot water outlet pipe 10 is at the minimum opening degree, it is communicated with the gap A and the control flow path 12b via the gap B operative as a communication path. On the other hand, a further gap is similarly defined between the valve body 6 and a part wherein the rib 21 is not formed. When the valve body 6 is at a rotational position shown in Fig. 1, the second hot water outlet pipe 10 is communicated with a space lower than the valve body 6 and a gap C via the further gap operative as a communication path. The gap B has a height h3 which is a difference between the height h2 of the rib 20 and the height h1 of the seat surface 19.

Next, the operation of this embodiment will be described.

The flow control valve 4 opens or closes the control flow paths 12a, 12b by the rotation of the valve body 6 about the shaft 13 to regulate a flow rate of hot water into the heat exchanger 3 so that a heating capacity of the car heater is controlled.

Concretely, when the heater is not operated (or when the cooler is operated at the maximum capacity in a refrigeration cycle mode in a car air-conditioner provided with a cooling evaporator), the valve body 6 is made to rotate to a position shown in Fig. 8 so that the control flow path 12b fully opens. At this time, the control flow path 12a fully closes so that all the hot water flowing into the valve via the hot water inlet pipe 8 flows out to the second hot water outlet pipe 10, eventually all the hot water flows out to the bypass circuit 5, and the hot water flowing to the heat exchanger 3 is interrupted.

Contrarily, when the heater is operated at the maximum capacity, the valve body 6 is made to rotate to a position shown in Fig. 7 to open the control flow path 12a so that the hot water from the hot water inlet pipe 8 flows out to the first outlet pipe 9. On the other hand, the control flow path 12b is at a position opposed to the inner wall 7a of the valve housing 7 and in a fully closed state (wherein the opening degree is minimum).

According to this embodiment, since the ribs 20, 21 are partially formed in the axial direction of the valve body 6, the second hot water outlet pipe 10 is communicated with the control flow path 12b via the gap B when the heater is operated at the maximum capacity. Accordingly, part of the hot water from the hot water inlet pipe 8 flows out via the gap B to the hot water outlet pipe 10.

When the heater is operated at the maximum capacity, the second hot water outlet pipe 10 is communicated with the gap C via the gap B. Since a lower space of the valve body 6 to which the hot water inlet pipe 8 is connected, communicates with the gap C, part of the hot water from the hot water inlet pipe 8 flows out via the gaps C and B to the second hot water outlet pipe 10.

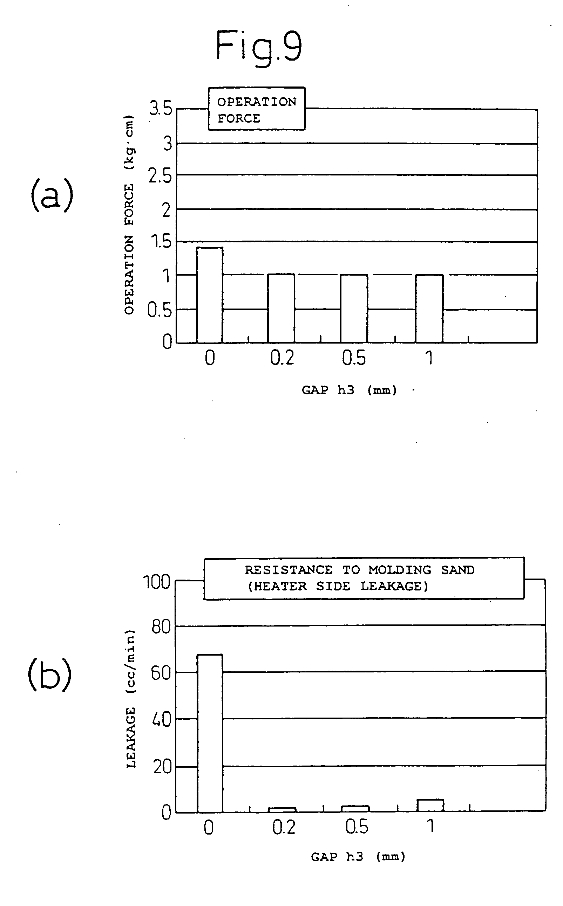

Accordingly, even if the second hot water outlet pipe 10 is in the fully closed state, foreign matter contained in the hot water (such as molding sand generated during the engine production) could be excluded from the flow control valve 4. Thereby, it is possible to prevent the rotor surface of the valve body 6 from being impaired due to the foreign matter. As a result, as shown in Fig. 9(b), it is possible to largely reduce the leakage of hot water to the heat exchanger 3 due to the damage to the valve body 6 and maintain the sealability between the valve body 6 and the valve housing 7.

Particularly, when the valve body 6 is small in diameter to minimize a valve size, it is possible to reduce the leakage of the hot water to the first hot water outlet pipe 9 when the valve body 6 rotates, by providing the rib 21 having the gap B in an area of the inner wall of the valve housing 7 wherein part of the valve body 6 to be sealed with the seal member 17 rotates when the heater is not operated.

Also, as shown in Fig. 9(a), in comparison with a structure in which the valve body 6 is in contact with the whole of the seat surface 19 (i.e., h3 = 0), it is possible to reduce the contact area between the valve body 6 and the valve housing 7a, whereby a force for rotating the valve body 6 can be minimized to a great extent.

As the hot water flows into the bypass circuit 5 when the heater is operated at the maximum capacity, a flow rate of the hot water flowing into the heat exchanger 3 decreases in accordance therewith, whereby the heating capacity of the heat exchanger 3 is lowered. Contrarily, according to this embodiment, since the gap B forming the communication path is narrower than the gap A between the valve body 6 and the inner wall 7a (h2 < h3), the flow resistance of the gap B becomes larger to prevent the hot water from smoothly flowing into the gap B. As a result, it is possible to suppress a flow rate to the second hot water outlet pipe 10 when the heater is operated at the maximum capacity, whereby the heating capacity of the heat exchanger 3 is prevented from lowering.

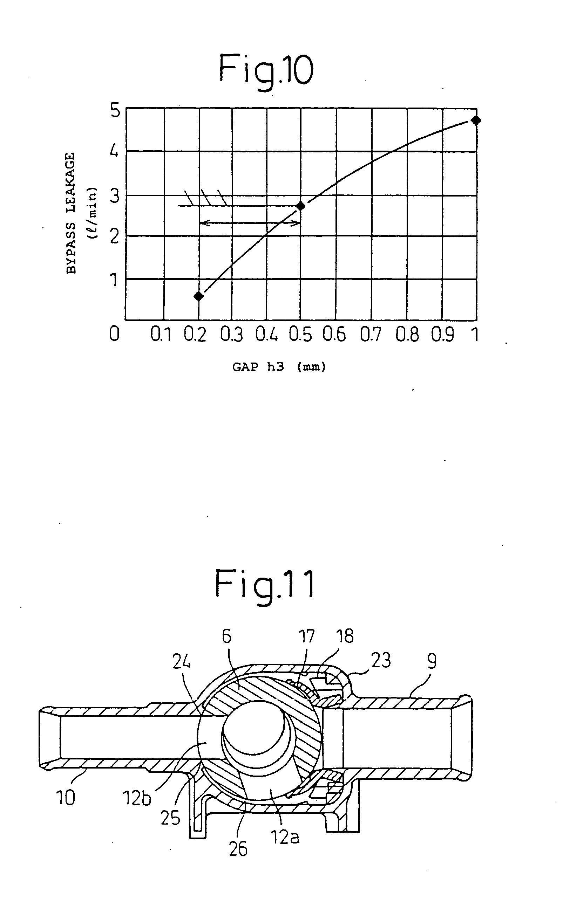

Particularly, according to the study made by the present inventors, it has been found, as shown in Fig. 10, that the leakage of the hot water to the bypass circuit 5 can be suppressed to a level in correspondence to a flow rate wherein the lowering of the heating capacity of the heat exchanger 3 is approximately 10% or less by determining the height h3 of the gap B at 0.5 mm or less. In this regard, the gap is preferably 0.2 mm or more in view of the manufacturing process.

### (Second embodiment)

While the second hot water outlet pipe is located at a position deviated from an axial center of the first hot water outlet pipe in the first embodiment, the first hot water outlet pipe 9 and the second hot water outlet pipe 10 may coincide with each other as shown in Fig. 11 wherein the same reference numerals are used for denoting the same elements as in the first embodiment and the detailed description thereof will be eliminated.

Two ribs 24, 25 are formed in the inner wall of a valve housing 23, and a valve body 6 is held so that a gap 26 is provided between the valve housing 23 and the valve body 6. The rib 25 formed at a position closer to a control flow path 12b, when the heater is operated at the maximum capacity (when the second outlet pipe 10 is fully closed), is partially formed in the axial direction of the valve body 6 so that the gap 26 communicates with the second hot water outlet pipe.

While the present invention has been described in detail with reference to the illustrated embodiments, it is apparent that various changes and modifications could be made by a person with ordinary skill in the art to which the invention pertains without departing from the scope of the appended claims.

## Claims

1. A flow control valve (4) provided in a hot water circuit comprising a hot water source (1), a heat exchanger (3) for heating air by exchanging heat between hot water supplied from said hot water source and the air, and a bypass circuit (5) for bypassing said heat exchanger, for regulating a flow rate of the hot water supplied from said hot water source to said heat exchanger and to said bypass circuit, said flow control valve comprising:
a valve housing (7) having an inlet flow path (8) for supplying the hot water from said hot water source (1) into said valve (4), a heat exchanger side outlet flow path (9) for directing the hot water supplied into said valve through said inlet flow path to said heat exchanger (3), and a bypass side outlet flow path (10) for directing the hot water supplied into said valve through said inlet flow path to said bypass circuit (5);
a valve body (6) provided in the interior of said valve housing (7) in a rotatable manner for opening/closing said heat exchanger side outlet flow path (9) and said bypass side outlet flow path (10); and
first and second control flow paths (12a, 12b) formed in said valve body (6) for regulating an open area of said heat exchanger side outlet flow path (9) and said bypass side outlet flow path (10), respectively,
**characterized in that**
a plurality of ribs (20, 21, 22) are projected from an inner wall (7a) of said valve housing (7), each extending in an axial direction of said valve body (6) and disposed separately at a predetermined distance from each other in a rotation direction of said valve body for rotatably supporting said valve body (6); and
one (20) of said ribs being partially formed in the axial direction of said valve body (6) such that a first gap (B) is formed in at least part of the rib (20) between said valve body (6) and the inner wall (7a) of said valve housing (7), said first gap (B) operating as a communication path for directing part of the hot water supplied into said valve (4) through said inlet flow path (8) to said bypass side outlet flow path (10) via said communication path when said valve body (6) is in a position where said second control flow path (12b) regulating the open area of said bypass side outlet flow path (10) is in a fully closed state.

2. A flow control valve as defined by claim 1,
**characterized in that**
a seat surface (19) is formed on the periphery of an opening (11) defining the upstream end of said bypass side outlet flow path (10) on said inner wall (7a) of said valve housing (7), with said first gap (B) being defined between said seat surface (19) and said valve body (6); and
said first gap (B) between said seat surface and said valve body is smaller than a second gap (A) between said valve body (6) and said valve housing (7).

3. A flow control valve as defined by claim 1 or 2,
**characterized in that**
said first gap (B) of said communication path is 0.2 mm or more and 0.5 mm or less.

4. A flow control valve as defined by any one of claims 1 to 3,
**characterized in that**
a seal member (17) for sealing said valve body (6) from the interior of said valve housing (7) is provided on the periphery of said heat exchanger side outlet flow path (9); and
said ribs are formed at a position opposed to a portion of said valve body to be sealed with said seal member (17) when said heat exchanger side outlet flow path (9) is closed.

## Patentansprüche

1. Strömungssteuerventil (4), vorgesehen in einem Heißwasserkreis, umfassend eine Heißwasserquelle (1), einen Wärmetauscher (3) zum Heizen von Luft durch Austausch von Wärme zwischen dem Heißwasser, welches von der Heißwasserquelle zugeführt wird, und der Luft, und einen Bypass-Kreis (5) zum Umgehen des Wärmetauschers zum Regulieren einer Strömungsrate von dem Heißwasser, welches von der Heißwasserquelle zu dem Wärmetauscher und zu dem Bypass-Kreis zugeführt wird, wobei das Strömungssteuerventil umfasst:
ein Ventilgehäuse (7) mit einem Einlassströmungspfad (8) zur Zufuhr des Heißwassers von der Heißwasserquelle (1) in das Ventil (4), einen wärmetauscherseitigen Auslassströmungsweg (9) zum Leiten des in das Ventil zugeführten Heißwassers durch den Einlassströmungsweg zu dem Wärmetauscher (3), und einen bypassseitigen Auslassströmungsweg (10) zum Leiten des in das Ventil zugeführten Heißwassers durch den Einlassströmungsweg zu dem Bypass-Kreis (5);
einen Ventilkörper (6), der in dem Inneren des Ventilgehäuses (7) in drehbarer Weise zum Öffnen/Schließen des wärmetauscherseitigen Auslassströmungsweges (9) und des bypassseitigen Auslassströmungsweges (10) vorgesehen ist; und
erste und zweite Steuerströmungswege (12a, 12b), die in dem Ventilkörper (6) ausgebildet sind, zum Regulieren einer Öffnungsfläche des wärmetauscherseitigen Auslassströmungsweges (9) bzw. des bypassseitigen Auslassströmungsweges (10),
**dadurch gekennzeichnet, dass**
eine Mehrzahl von Rippen (20, 21, 22) von einer inneren Wand (7a) des Ventilgehäuses (7) hervorstehen, wobei sich jede in der Axialrichtung des Ventilkörpers (6) erstreckt und separat mit einem vorbestimmten Abstand voneinander in einer Drehrichtung des Ventilkörpers angeordnet sind, um den Ventilkörper (6) drehbar zu tragen; und
eine (20) der Rippen teilweise in der Axialrichtung des Ventilkörpers (6) derart ausgebildet ist, dass ein erster Spalt (B) in zumindest einem Teil der Rippe (20) zwischen dem Ventilkörper (6) und der inneren Wand (7a) des Ventilgehäuses (7) ausgebildet ist, wobei der erste Spalt (B) als ein Verbindungsweg zum Leiten eines Teils des in das Ventil (4) zugeführten Heißwassers durch den Einlassströmungsweg (8) zu dem bypassseitigen Auslassströmungsweg (10) über den Verbindungsweg arbeitet, wenn der Ventilkörper (6) in einer Position ist, in welcher der zweite Steuerströmungsweg (12b), welcher die Öffnungsfläche des bypassseitigen Auslassströmungswegs (10) reguliert, in einem vollständig geschlossenen Zustand ist.

2. Strömungssteuerventil nach Anspruch 1,
**dadurch gekennzeichnet, dass**
eine Sitzoberfläche (19) auf dem Rand einer Öffnung (11) ausgebildet ist, welche das stromaufwärtige Ende des bypassseitigen Auslassströmungswegs (10) auf der inneren Wand (7a) des Ventilgehäuses (7) begrenzt, wobei der erste Spalt (B) zwischen der Sitzoberfläche (19) und dem Ventilkörper (6) begrenzt ist; und
der erste Spalt (B) zwischen der Sitzoberfläche und dem Ventilkörper kleiner als ein zweiter Spalt (A) zwischen dem Ventilkörper (6) und dem Ventilgehäuse (7) ist.

3. Strömungssteuerventil nach Anspruch 1 oder 2,
**dadurch gekennzeichnet, dass**
der erste Spalt (B) des Verbindungswegs 0,2 mm oder mehr und 0,5 mm oder weniger ist.

4. Strömungssteuerventil nach einem der Ansprüche 1 bis 3,
**dadurch gekennzeichnet, dass**
ein Dichtungselement (17) zum Abdichten des Ventilkörpers (6) von dem Inneren des Ventilgehäuses (7) auf dem Rand des wärmetauscherseitigen Auslassströmungsweges (9) vorgesehen ist; und
die Rippen an einer Position gegenüberliegend einem Abschnitt des Ventilkörpers, der mit dem Dichtungselement (17) abzudichten ist, ausgebildet sind, wenn der wärmetauscherseitige Auslassströmungsweg (9) geschlossen ist.

## Revendications

1. Soupape de régulation de débit (4) prévue dans un circuit d'eau chaude comprenant une source d'eau chaude (1), un échangeur thermique (3) destiné à chauffer l'air en échangeant la chaleur entre l'eau chaude délivrée depuis ladite source d'eau chaude et l'air, et un circuit de dérivation (5) destiné à dériver ledit échangeur thermique, pour réguler un débit d'écoulement de l'eau chaude délivrée depuis ladite source d'eau chaude audit échangeur thermique et audit circuit de dérivation, ladite soupape de régulation de débit comprenant :
un carter de soupape (7) possédant un chemin d'écoulement d'admission (8) destiné à amener l'eau chaude en provenance de ladite source d'eau chaude (1) dans ladite soupape (4), un chemin d'écoulement d'évacuation du côté de l'échangeur thermique (9) destiné à diriger l'eau chaude amenée dans ladite soupape à travers ledit chemin d'écoulement d'admission jusqu'audit échangeur thermique (3), et un chemin d'écoulement d'évacuation du côté de la dérivation (10) destiné à diriger l'eau chaude amenée dans ladite soupape à travers ledit chemin d'écoulement d'admission jusqu'audit circuit de dérivation (5) ;
un corps de soupape (6) prévu à l'intérieur dudit carter de soupape (7) de manière rotative pour ouvrir/fermer ledit chemin d'écoulement d'évacuation du côté de l'échangeur thermique (9) et ledit chemin d'écoulement d'évacuation du côté de la dérivation (10) ; et
des premier et second chemins d'écoulement de régulation (12a, 12b) formés dans ledit corps de soupape (6) pour réguler une zone ouverte dudit chemin d'écoulement d'évacuation du côté de l'échangeur thermique (9) et dudit chemin d'écoulement d'évacuation du côté de la dérivation (10), respectivement,
**caractérisé en ce que**
une pluralité de nervures (20, 21, 22) dépassent depuis une paroi interne (7a) dudit carter de soupape (7), chacune s'étendant dans une direction axiale dudit corps de soupape (6) et disposée séparément à une distance prédéterminée les unes des autres dans une direction de rotation dudit corps de soupape pour supporter de manière rotative ledit corps de soupape (6) ; et
l'une (20) desdites nervures étant partiellement formée dans la direction axiale dudit corps de soupape (6) de telle sorte qu'un premier jeu (B) est formé dans au moins une partie de la nervure (20) entre ledit corps de soupape (6) et la paroi interne (7a) dudit carter de soupape (7), le premier jeu (B) servant de chemin de communication pour diriger une partie de l'eau chaude amenée dans ladite soupape (4) à travers ledit chemin d'écoulement d'admission (8) jusqu'audit chemin d'écoulement d'évacuation du côté de la dérivation (10) via ledit chemin de communication quand ledit corps de soupape (6) est dans une position dans laquelle ledit second chemin d'écoulement de régulation (12b) régulant la zone ouverte dudit chemin d'écoulement d'évacuation du côté de la dérivation (10) est dans un état complètement fermé.

2. Soupape de régulation de débit selon la revendication 1,
**caractérisé en ce que**
une surface de siège (19) est formée à la périphérie d'une ouverture (11) définissant l'extrémité amont dudit chemin d'écoulement d'évacuation du côté de la dérivation (10) sur ladite paroi interne (7a) dudit carter de soupape (7), avec ledit premier jeu (B) étant défini entre ladite surface de siège (19) et ledit corps de soupape (6) ; et
ledit premier jeu (B) entre ladite surface de siège et ledit corps de soupape est plus petit qu'un second jeu (A) entre ledit corps de soupape (6) et ledit carter de soupape (7).

3. Soupape de régulation de débit selon la revendication 1 ou 2,
**caractérisé en ce que**
ledit premier jeu (B) dudit chemin de communication mesure 0,2 mm ou plus et 0,5 mm ou moins.

4. Soupape de régulation de débit selon l'une quelconque des revendications 1 à 3,
**caractérisé en ce que**
un élément d'étanchéité (7) destiné à étanchéifier ledit corps de soupape (6) depuis l'intérieur dudit carter de soupape (7) est prévu à la périphérie dudit chemin d'écoulement d'évacuation du côté de l'échangeur thermique (9) ; et
lesdites nervures sont formées à un emplacement en regard d'une partie dudit corps de soupape devant être étanchéifiée avec ledit élément d'étanchéité (17) quand ledit chemin d'écoulement d'évacuation du côté de l'échangeur thermique (9) est fermé.
